# EUROPÄISCHE PATENTSCHRIFT

(11) **EP 2 870 041 B1**
(45) Veröffentlichungstag und Bekanntmachung des Hinweises auf die Patenterteilung: **09.11.2016**
(21) Anmeldenummer: 13730227.9
(22) Anmeldetag: 18.06.2013
(51) Int. Cl.: B60W 30/16, B60W 30/18

(54) **VERFAHREN FÜR EIN FAHRERASSISTENZSYSTEM EINES FAHRZEUGS**
METHOD FOR A DRIVER ASSISTANCE SYSTEM OF A VEHICLE
PROCÉDÉ POUR UN SYSTÈME D'ASSISTANCE À LA CONDUITE D'UN VÉHICULE

(30) Priorität: 07.07.2012 DE 102012013689
(43) Veröffentlichungstag der Anmeldung: 13.05.2015
(73) Patentinhaber: Volkswagen Aktiengesellschaft, 38440 Wolfsburg (DE)
(72) Erfinder: DORNIEDEN, Bernd, 38110 Braunschweig (DE); JUNGE, Lutz, 38106 Braunschweig (DE); PASCHEKA, Patrick, 38106 Braunschweig (DE)
(86) Internationale Anmeldenummer: PCT/EP2013/062577
(87) Internationale Veröffentlichungsnummer: WO 2014/009108

(56) Entgegenhaltungen:
- DE-A1-102004 017 115
- DE-A1-102009 002 521
- DE-A1-102010 031 382
- DE-A1-102010 052 964
- DE-A1-102011 109 039

## Beschreibung

Die vorliegende Erfindung betrifft ein Verfahren für ein Fahrerassistenzsystem eines Fahrzeugs sowie ein entsprechendes Fahrerassistenzsystem. Die vorliegende Erfindung betrifft insbesondere ein Fahrerassistenzsystem zur automatischen Regelung eines Abstands zwischen dem eigenen Fahrzeug, dem sogenannten Ego-Fahrzeug, und einem vorausfahrenden Fahrzeug.

In Kraftfahrzeugen, beispielsweise in Personenkraftwagen oder Lastkraftwagen, sind Fahrerassistenzsysteme zur automatischen Regelung des Abstands des eigenen Fahrzeugs zu einem vorausfahrenden Fahrzeug bekannt. Entsprechende Systeme sind seit einiger Zeit in verschiedenen Fahrzeugklassen verfügbar. Üblicherweise werden Sensoren zur Ermittlung eines Abstands zwischen dem eigenen Fahrzeug und dem vorausfahrenden Fahrzeug verwendet und in Abhängigkeit von dieser Größe eine Beschleunigungsanforderung bestimmt, um einen definierten gewünschten Sollabstand einzuregeln. Diese Beschleunigungsanforderung wird beispielsweise über Antriebsmomente oder Bremsmomente im Fahrzeug umgesetzt.

Darüber hinaus werden beispielsweise in der DE 10 2009 046341 A1, der
DE 10 2008 005328 A1 und der DE 10 2009 028242 A1 technische Lösungen zur Nutzung von Ausrollmanövern im Rahmen einer Geschwindigkeitsregelung eines Fahrzeugs beschrieben. Darüber hinaus ist aus der DE 10 2009 002521 A1 ein Verfahren zum Betreiben eines Fahrzeugs mit einem Segel- bzw. Rollmodus bekannt, bei welchem beispielsweise Ausrollmanöver bei bevorstehenden Bremseingriffen aus einer Abstandsregelung deaktiviert werden.

Die DE 10 2008 000696 A1 betrifft einen Abstands- und Geschwindigkeitsregler für Kraftfahrzeuge. Eine durch ein Bedienelement vom Fahrer aktivierbare Begrenzungseinrichtung ist dazu ausgebildet, einen Variationsbereich für eine Beschleunigung einzuschränken.

In der EP 2163449 A2 wird ein System vorgestellt, welches ein verbrauchsoptimiertes Moment unter Berücksichtigung einer Abstandssensorik bestimmt und in einem nachgelagerten Entscheider zwischen diesem und einem durch den Fahrer gewünschten Moment abwägt.

Die DE 10 2004 017115 A1 betrifft ein Verfahren zur Geschwindigkeitsregelung für ein Fahrzeug mit automatischem Getriebe. Bei dem Verfahren kann die Fahrgeschwindigkeit Werte in einem Bereich um die Sollgeschwindigkeit annehmen. Das Verfahren umfasst eine Beschleunigungsphase und eine Ausrollphase des Fahrzeugs. In der Beschleunigungsphase wird das Fahrzeug auf eine obere Schwelle für die Geschwindigkeit beschleunigt, welche höher als die Sollgeschwindigkeit ist. In der anschließenden Ausrollphase wird das Fahrzeug, wenn das Fahrzeug eine untere Schwelle für die Geschwindigkeit erreicht, im verbrauchsoptimierten Bereich wieder auf die obere Schwelle für die Geschwindigkeit beschleunigt.

Die DE 10 2008 000131 A1 betrifft ein Verfahren zum Betreiben eines Fahrzeugs, bei welchem das Fahrzeug in Abhängigkeit einer aktuellen Position des Fahrzeugs und in Abhängigkeit von Umgebungsinformationen des Fahrzeugs derart betätigt wird, dass eine aktuell an einem Fahrzeug angreifende und zu der von der Antriebseinrichtung erzeugbaren Antriebskraft zusätzliche Antriebsenergie des Fahrzeugs unter Berücksichtigung eines zu erwartenden Betriebszustandsverlaufs des Fahrzeugs für den Betrieb des Fahrzeugs verwendet wird.

Die DE 10 2009 046340 A1 betrifft ein Verfahren zur Steuerung einer Roll- oder Segelfunktion eines Fahrzeugs. Damit die Roll- oder Segelfunktion möglichst effizient genutzt und dennoch sicher und komfortabel beendet werden kann, wird ein Kraftschluss im Antriebsstrang in Abhängigkeit von einer wählbaren Geschwindigkeitsdifferenz zwischen der aktuellen Fahrzeuggeschwindigkeit und einer mittels einer Fahrgeschwindigkeitsregeleinrichtung festgesetzten unteren Grenzgeschwindigkeit wieder hergestellt.

Die DE 10 2010 031382 A1 betrifft ein Fahrerassistenzsystem in einem Kraftfahrzeug. Bei aktivierter Geschwindigkeitsregelung mittels eines elektronischen Steuergeräts und damit verbundenen Sensoren wird eine vorgegebene Geschwindigkeit oder ein vorgegebener Abstand zum vorausfahrenden Fahrzeug im Wesentlichen konstant gehalten. Bei Vorliegen eines Segelbetriebs werden auch bei deaktivierter Geschwindigkeitsregelung mittels der Sensoren der Abstand und/oder die Relativgeschwindigkeit zum vorausfahrenden Fahrzeug erfasst und der Segelbetrieb wird ausgeschaltet, wenn der Abstand einen vorgegebenen Schwellenwert unterschreitet oder die Abstandsverringerung pro Zeiteinheit zum vorausfahrenden Fahrzeug einen vorgegebenen Schwellenwert überschreitet.

Die DE 10 2010 052964 A1 betrifft ein Verfahren zum Betreiben eines Fahrzeugs, bei welchem in Schub- oder Bremsphasen des Fahrzeugs Energie rekuperiert und in einen fahrzeuginternen Energiespeicher gespeichert wird.

Bei üblichen Abstandsregelungen treten mitunter Beschleunigungsanforderungen auf, die zwischen Null und einer Verzögerung während eines antriebs- und bremskraftfreien Ausrollens liegen. Diese Betriebszustände sind aus energetischer Sicht ineffizient, da eine Leistung vom Antrieb angefordert wird, welche in der Regel mit einem schlechten Wirkungsgrad bereitgestellt wird.

Aufgabe der vorliegenden Erfindung ist es daher, ein verbessertes Verfahren, insbesondere ein energieeffizienteres Verfahren, für eine automatische Abstandsregelung eines Fahrerassistenzsystems bereitzustellen.

Diese Aufgabe wird gemäß der vorliegenden Erfindung durch ein Verfahren für ein Fahrerassistenzsystem eines Fahrzeugs nach Anspruch 1, ein Fahrerassistenzsystem nach Anspruch 12 und ein Fahrzeug nach Anspruch 14 gelöst. Die abhängigen Ansprüche definieren bevorzugte und vorteilhafte Ausführungsformen der Erfindung.

Gemäß der vorliegenden Erfindung wird ein Verfahren für ein Fahrerassistenzsystem eines Fahrzeugs bereitgestellt. Das Fahrerassistenzsystem dient zur Steuerung oder Regelung eines Abstands des Fahrzeugs zu einem weiteren Fahrzeug. Bei dem Verfahren wird ein Abstand zwischen dem Fahrzeug und dem weiteren Fahrzeug bestimmt und eine Relativgeschwindigkeit zwischen dem Fahrzeug und dem weiteren Fahrzeug bestimmt. Wenn sich das Fahrzeug an das weitere Fahrzeug annähert, wird das Fahrzeug in einen Betriebszustand aus einer Gruppe von mehreren vorgegebenen Betriebszuständen betrieben. Der für den Betrieb des Fahrzeugs ausgewählte Betriebszustand aus der Gruppe der mehreren vorgegebenen Betriebszustände wird in Abhängigkeit von dem Abstand und der Relativgeschwindigkeit ausgewählt. Die vorgegebenen Betriebszustände können derart gewählt sein, dass energieineffiziente Betriebszustände ausgeschlossen werden. Indem das Fahrzeug bei einer Näherung an das weitere Fahrzeug einen der vorgegebenen Betriebszustände auswählt, kann ein energieineffizienter Betrieb des Fahrzeugs vermieden werden. Dadurch kann insbesondere beim Annähern des Fahrzeugs an das weitere Fahrzeug ein Energieverbrauch des Fahrzeugs verringert werden.

Weiterhin wird bei dem Verfahren jedem der Betriebszustände der Gruppe der mehreren vorgegebenen Betriebszustände jeweils ein Abstandsbereich zugeordnet. Der jeweilige Abstandsbereich wird in Abhängigkeit von einer Geschwindigkeit des Fahrzeugs und der Relativgeschwindigkeit bestimmt. Wenn sich das Fahrzeug an das weitere Fahrzeug annähert und der Abstand zwischen dem Fahrzeug und dem weiteren Fahrzeug in einem Abstandsbereich liegt, welcher einem der Betriebszustände zugeordnet ist, wird das Fahrzeug in dem zugeordneten Betriebszustand betrieben. Indem die Abstandsbereiche dynamisch in Abhängigkeit von der Geschwindigkeit des Fahrzeugs und der Relativgeschwindigkeit bestimmt werden, können die Betriebszustände aus der Gruppe der mehreren vorgegebenen Betriebszustände energieeffizient ausgewählt werden. Um beispielsweise eine bestimmte Verzögerung des Fahrzeugs bereitzustellen, kann diese Verzögerung beispielsweise bei einer hohen Geschwindigkeit des Fahrzeugs aufgrund des hohen Luftwiderstands durch beispielsweise einen Segelbetrieb erreicht werden, wohingegen die gleiche Verzögerung bei niedriger Geschwindigkeit durch einen Schubbetrieb oder Rekuperationsbetrieb erreicht werden kann.

Ob sich das Fahrzeug dem weiteren Fahrzeug nähert oder nicht, kann beispielsweise in Abhängigkeit von der Relativgeschwindigkeit ermittelt werden.

Gemäß einer Ausführungsform umfasst das Fahrzeug einen Antriebsstrang zwischen einem Antriebsmotor des Fahrzeugs und Antriebsrädern des Fahrzeugs. Der Antriebsstrang kann wahlweise geöffnet oder geschlossen sein. Bei geöffnetem Antriebsstrang besteht keine mechanische Kopplung zwischen dem Antriebsmotor und den Antriebsrädern. Bei geschlossenem Antriebsstrang besteht eine mechanische Kopplung zwischen dem Antriebsmotor und den Antriebsrädern. Bei dieser Ausführungsform umfasst die Gruppe der mehreren vorgegebenen Betriebszustände keinen Betriebszustand, in welchem der Antriebsstrang geschlossen ist und der Antriebsmotor durch die Bewegung des Fahrzeugs geschleppt wird und der Antriebsmotor Energie zur Verringerung seiner Schleppbremsung aufnimmt. Anders ausgedrückt wird ein Betriebszustand vermieden, in welchem der Antriebsmotor bei geschlossenem Antriebsstrang durch die Bewegung des Fahrzeugs geschleppt wird und gleichzeitig Energie, beispielsweise Kraftstoff, aufnimmt, um die durch den Schleppbetrieb bedingte Verzögerung des Fahrzeugs zu verringern. Ein derartiger Betrieb des Fahrzeugs ist im Allgemeinen mit einem schlechten Wirkungsgrad verbunden. Daher ist es vorteilhaft, dass die Gruppe der mehreren vorgegebenen Betriebszustände diesen Betriebszustand explizit ausschließt, sodass das Fahrzeug bei einer Annäherung an das weitere Fahrzeug diesen Betriebszustand meidet.

Gemäß einer weiteren Ausführungsform umfasst die Gruppe der mehreren vorgegebenen Betriebszustände mindestens einen Betriebszustand, in welchem der Antriebsstrang des Fahrzeugs geöffnet ist. Ein Betrieb des Fahrzeugs mit geöffnetem Antriebsstrang wird auch als Freilaufbetrieb oder Segelbetrieb bezeichnet, je nachdem, ob der von den Antriebsrädern entkoppelte Antriebsmotor im Leerlauf weiterläuft oder abgeschaltet wird. Im Segel- oder Freilaufbetrieb kann das Fahrzeug besonders energieeffizient betrieben werden, da das Fahrzeug nicht über einen Schleppbetrieb des Antriebsmotors verzögert wird und somit ein Geschwindigkeitsverlust bei äußerst niedrigem Energieverbrauch gering ist.

Gemäß einer weiteren Ausführungsform besteht die Gruppe der mehreren vorgegebenen Betriebszustände aus folgenden Betriebszuständen:
- Konstantfahrbetrieb: Der Antriebsmotor gibt ein antreibendes Moment über den geschlossenen Antriebsstrang an die Antriebsräder des Fahrzeugs aus. Das Fahrzeug wird somit über den Antriebsmotor angetrieben. Vorzugsweise wird das Fahrzeug bei konstanter Drehzahl des Antriebsmotors mit konstanter Geschwindigkeit angetrieben.
- Freilaufbetrieb: Der Antriebsstrang des Fahrzeugs zwischen Antriebsmotor und Antriebsrädern ist geöffnet und der Antriebsmotor läuft im Leerlauf weiter.
- Schubbetrieb: Der Antriebsstrang des Fahrzeugs ist geschlossen und der Antriebsmotor wird durch die Bewegung des Fahrzeugs geschleppt. Der Antriebsmotor nimmt jedoch in diesem Schubbetrieb keine zusätzliche Energie, beispielsweise in Form von Kraftstoff, auf. Anders ausgedrückt wird der Antriebsmotor einzig über den Antriebsstrang des Fahrzeugs aufgrund der Bewegung des Fahrzeugs in Bewegung gehalten.
- Segelbetrieb: Im Segelbetrieb ist der Antriebsstrang des Fahrzeugs geöffnet und der Antriebsmotor abgestellt. In diesem Betrieb nimmt der Antriebsmotor keine zusätzliche Energie, beispielsweise in Form von Kraftstoff, auf.
- Rekuperationsbetrieb: Im Rekuperationsbetrieb wird kinetische Energie des Fahrzeugs in eine in einem Energiespeicher des Fahrzeugs speicherbare Energie umgewandelt und gespeichert. Beispielsweise kann das Fahrzeug mit den Antriebsrädern gekoppelte Stromgeneratoren umfassen, welche elektrische Energie erzeugen, welche beispielsweise in einem Akkumulator oder einer Brennstoffzelle des Fahrzeugs gespeichert werden kann. Alternativ kann im Rekuperationsbetrieb beispielsweise auch über einen Antrieb des Verbrennungsmotors und einer damit verbundenen Lichtmaschine kinetische Energie des Fahrzeugs in elektrische Energie umgewandelt werden, welche in einer Starterbatterie des Fahrzeugs gespeichert wird. Weiterhin kann das Fahrzeug alternativ oder zusätzlich beispielsweise mechanische Energiespeicher, wie z. B. Federenergiespeicher oder Schwungscheibenenergiespeicher umfassen.
- Bremsbetrieb: Dabei wird eine Bremsanlage des Fahrzeugs, beispielsweise eine mechanisch, hydraulisch oder pneumatisch angetriebene Reibbremsanlage, betätigt. Im Bremsbetrieb wird kinetische Energie des Fahrzeugs beispielsweise in Wärme umgesetzt.
- Kombination aus den zuvor beschriebenen Betriebszuständen: Die zuvor beschriebenen Betriebszustände können teilweise miteinander kombiniert werden, beispielsweise kann der Rekuperationsbetrieb mit dem Bremsbetrieb, Segelbetrieb, Schubbetrieb oder Freilaufbetrieb und ggf. sogar mit dem Konstantfahrtbetrieb kombiniert werden. Ebenso kann der Bremsbetrieb beispielsweise mit dem Schubbetrieb oder dem Rekuperationsbetrieb kombiniert werden.

Die zuvor beschriebenen Betriebszustände weisen jeweils für sich eine sehr hohe Energieeffizienz auf. Indem das Fahrzeug bei einer Annäherung an das weitere Fahrzeug nur in einem der zuvor beschriebenen Betriebszustände betrieben wird, kann eine energieeffiziente Annäherung an das weitere Fahrzeug sichergestellt werden.

Gemäß einer weiteren Ausführungsform umfasst das Verfahren weiterhin ein Bestimmen eines Sollabstands zwischen dem Fahrzeug und dem weiteren Fahrzeug in Abhängigkeit von einer Geschwindigkeit des Fahrzeugs und der Relativgeschwindigkeit. Wenn sich das Fahrzeug an das weitere Fahrzeug annähert, wird das Fahrzeug in Abhängigkeit von dem Abstand zwischen dem Fahrzeug und dem weiteren Fahrzeug und dem Sollabstand in einem der Betriebszustände aus der Gruppe der mehreren vorgegebenen Betriebszustände betrieben. Durch die Bestimmung und Berücksichtigung des Sollabstands in Abhängigkeit von der Geschwindigkeit des Fahrzeugs können beispielsweise gesetzliche Forderungen an einen Mindestabstand eingehalten werden. Darüber hinaus kann der Sollabstand beispielsweise mittels eines Einstellmittels von einem Fahrer des Fahrzeugs beeinflusst werden. Dadurch kann der Sollabstand, insbesondere unter Berücksichtigung gesetzlicher Auflagen, nach den Wünschen des Fahrers vergrößert oder verkleinert werden.

Gemäß einer weiteren Ausführungsform wird jedem der Betriebszustände der Gruppe der mehreren vorgegebenen Betriebszustände jeweils ein Aktivierungsabstandsbereich und ein Deaktivierungabstandsbereich zugeordnet. Der Aktivierungsabstandsbereich wird in Abhängigkeit der Geschwindigkeit des Fahrzeugs und der Relativgeschwindigkeit bestimmt. Der Deaktivierungabstandsbereich wird in Abhängigkeit der Geschwindigkeit des Fahrzeugs und der Relativgeschwindigkeit bestimmt. Ein Betrieb des Fahrzeugs in einem der Betriebszustände aus der Gruppe der mehreren vorgegebenen Betriebszustände wird begonnen, wenn sich das Fahrzeug an das weitere Fahrzeug annähert und der Abstand zwischen dem Fahrzeug und dem weiteren Fahrzeug in dem diesem Betriebszustand zugeordneten Aktivierungsabstandsbereich liegt. Der Betrieb in diesem zuvor begonnenem Betriebszustand wird beendet, wenn der Abstand zwischen dem Fahrzeug und dem weiteren Fahrzeug außerhalb des diesem Betriebszustand zugeordneten Deaktivierungsabstandsbereichs liegt. Durch die Verwendung von Aktivierungsabstandsbereichen und Deaktivierungsabstandsbereichen zur Aktivierung bzw. Deaktivierung der jeweiligen Betriebszustände kann auf einfache Art und Weise eine Hysterese erreicht werden, wodurch unnötig häufige Betriebszustandswechsel zwischen zwei Betriebszuständen bei Grenzbedingungen vermieden werden können. Dadurch kann ein Fahrkomfort für einen Fahrer des Fahrzeugs verbessert werden.

Gemäß einer weiteren Ausführungsform wird bei dem Verfahren ferner ein Modell einer Fahrzeugdynamik des Fahrzeugs bestimmt. Die zuvor beschriebenen Sollabstände, Abstandsbereiche, Aktivierungsabstandsbereiche oder Deaktivierungsabstandsbereiche werden zusätzlich in Abhängigkeit von dem Modell der Fahrzeugdynamik bestimmt. Die Fahrzeugdynamik kann beispielsweise einen oder mehrere der folgenden Parameter umfassen:
- Fahrzeugmasse,
- Luftwiderstandsbeiwert,
- Querspantfläche,
- Rollwiderstandsbeiwert,
- übersetzungsabhängige Zuschlagsterme,
- Windgeschwindigkeit,
- Windrichtung,
- Niederschlagsintensität,
- Steigung einer Strecke oder Fahrbahn vor dem Fahrzeug,
- Straßenklasse, wie z. B. Autobahn, Landstraße, Stadt usw.,
- Anzahl der Fahrstreifen,
- Geschwindigkeitsbeschränkungen oder
- Überholverbote.

Durch die Verwendung des Modells der Fahrzeugdynamik können die vorgegebenen Betriebszustände energieeffizienter eingesetzt werden.

Gemäß einer weiteren Ausführungsform wird bei dem Verfahren der Sollabstand, der Abstandsbereich, der Aktivierungsabstandsbereich und/oder der Deaktivierungsabstandsbereich zusätzlich in Abhängigkeit von einem durch einen Benutzer oder Fahrer des Fahrzeugs einstellbaren Fahrmodus bestimmt. Der Fahrmodus kann beispielsweise einen Sportmodus oder einen Energiesparmodus umfassen. Der Fahrmodus kann weiterhin variabel über beispielsweise eine Walze oder einen Drehsteller an beispielsweise einem Lenkrad des Fahrzeugs kontinuierlich zwischen dem Sportmodus und dem Energiesparmodus einstellbar sein. Dadurch kann eine von dem Fahrer gewünschte Fahrdynamik bei der Abstandsregelung erreicht werden.

Eine Information über den aktuell ausgewählten Betriebszustand, in welchem das Fahrzeug gerade betrieben wird, oder eine Information über einen zukünftigen Betriebszustand, in welchem das Fahrzeug voraussichtlich als nächstes betrieben werden wird, kann an einen Fahrer des Fahrzeugs ausgegeben werden. Die Ausgabe kann beispielsweise in einem Kombünstrument oder über ein sogenanntes Head-Up-Display in einer Windschutzscheibe des Fahrzeugs angezeigt werden. Die Anzeige kann beispielsweise mittels graphischer Hervorhebungen, wie z. B. farbliche Kennzeichnung, der Abstandsbereiche, in denen die jeweiligen Betriebszustände aktiviert werden, dargestellt werden. Indem dem Fahrer die energieeffiziente Arbeitsweise des Fahrerassistenzsystems dargestellt wird, kann ein verbessertes Verständnis einer energieeffizienten Fahrweise beim Fahrer erreicht werden.

Gemäß der vorliegenden Erfindung wird weiterhin ein Fahrerassistenzsystem für ein Fahrzeug zur Steuerung eines Abstands des Fahrzeugs zu einem weiteren Fahrzeug bereitgestellt. Das Fahrerassistenzsystem umfasst einen Sensor zum Bestimmen eines Abstands zwischen dem Fahrzeug und dem weiteren Fahrzeug und eine Steuereinheit. Die Steuereinheit ist in der Lage, eine Relativgeschwindigkeit zwischen dem Fahrzeug und dem weiteren Fahrzeug in Abhängigkeit einer Änderung des Abstand zwischen dem Fahrzeug und dem weiteren Fahrzeug zu bestimmen und das Fahrzeug in einem Betriebszustand aus einer Gruppe von mehreren vorgegebenen Betriebszuständen in Abhängigkeit von dem Abstand und der Relativgeschwindigkeit zu betreiben, wenn die Steuereinheit festgestellt hat, dass sich das Fahrzeug an das weitere Fahrzeug annähert. Das Fahrerassistenzsystem kann zur Durchführung des zuvor beschriebenen Verfahrens und einer seiner Ausführungsformen ausgestaltet sein und umfasst daher auch die zuvor beschriebenen Vorteile.

Gemäß der vorliegenden Erfindung wird weiterhin ein Fahrzeug mit dem zuvor beschriebenen Fahrerassistenzsystem bereitgestellt.

Die vorliegende Erfindung wird nachfolgend unter Bezugnahme auf die Zeichnung im Detail beschrieben werden.
Fig. 1 zeigt eine schematische Darstellung eines Fahrerassistenzsystems gemäß einer Ausführungsform der vorliegenden Erfindung.
Fig. 2 zeigt schematisch eine Zuordnung von Abstandsbereichen zu diskreten Betriebszuständen gemäß einer Ausführungsform der vorliegenden Erfindung.
Fig. 3 zeigt sich überschneidende Abstandsbereiche zur Aktivierung und Deaktivierung eines Betriebszustands gemäß einer Ausführungsform der vorliegenden Erfindung.
Fig. 4 zeigt eine weitere Darstellung der Zuordnung von Abstandsbereichen, Fahrzeuggeschwindigkeiten und Relativgeschwindigkeiten zu diskreten Betriebszuständen gemäß einer Ausführungsform der vorliegenden Erfindung.
Fig. 5 zeigt schematisch ein Verhalten eines Fahrzeugs mit einem Fahrerassistenzsystem gemäß einer Ausführungsform der vorliegenden Erfindung im Vergleich zu einem Fahrzeug mit einem herkömmlichen Fahrerassistenzsystem.
Fig. 6 zeigt ein Fahrzeug gemäß einer Ausführungsform der vorliegenden Erfindung.

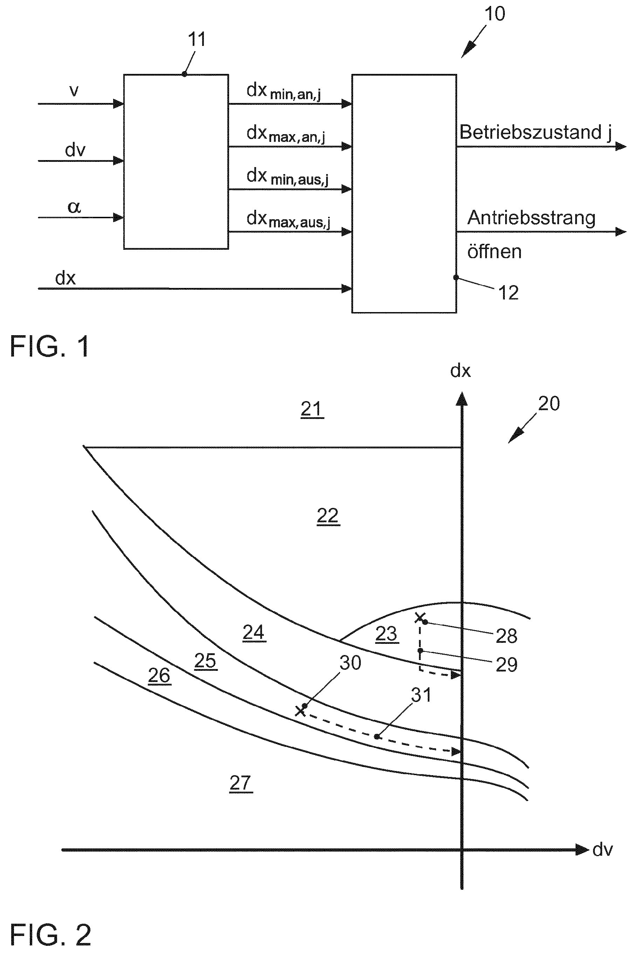

Fig. 1 zeigt ein Fahrerassistenzsystem 10 für ein Fahrzeug zur Steuerung oder Regelung eines Abstands des Fahrzeugs zu einem weiteren Fahrzeug. Das Fahrerassistenzsystem umfasst (nicht gezeigte) Sensoren zur Bestimmung einer aktuellen Geschwindigkeit v des Fahrzeuges und zur Bestimmung eines Abstands dx des Fahrzeugs zu dem weiteren Fahrzeug. Mit einer (nicht gezeigten) Steuereinheit wird eine Relativgeschwindigkeit dv zwischen dem Fahrzeug und dem weiteren Fahrzeug beispielsweise in Abhängigkeit von einer Änderung des Abstands dx bestimmt. Einer weiteren Steuereinheit 11 des Fahrerassistenzsystems 10 werden die Geschwindigkeit v, die Relativgeschwindigkeit dv sowie weitere Parameter, welche beispielsweise eine Fahrzeugdynamik betreffen können, zugeführt. In der Fig. 1 ist beispielhaft eine Steigung α einer Fahrtstrecke vor dem Fahrzeug als weiterer Parameter gezeigt. Die Steuereinheit 11 bestimmt in Abhängigkeit der Geschwindigkeit v, der Relativgeschwindigkeit dv und der Steigung α für jeden Betriebszustand aus einer Gruppe von mehreren vorgegebenen Betriebszuständen jeweils einen Aktivierungsabstandsbereich und einen Deaktivierungsabstandsbereich. Der Aktivierungsabstandsbereich wird über einen minimalen Aktivierungsabstand dx_{min, an, j} für jeden Betriebszustand j und einen maximalen Abstand dxₘₐₓ, _{an, j} definiert. Ebenso wird für jeden Betriebszustand j ein entsprechender Deaktivierungsabstandsbereich über einen minimalen Abstand dx_{min, aus, j} und einen maximalen Abstand dx_{max, aus, j} definiert. Ein Betriebszustand j aus der vorgegebenen Gruppe von Betriebszuständen wird von einer Steuereinheit 12 aktiviert, wenn der aktuelle Abstand dx zwischen dem Fahrzeug und dem weiteren Fahrzeug in dem Bereich dx_{min, an, j} bis dx_{max, an, j} liegt. Der aktivierte Betriebszustand j wird von der Steuereinheit 12 deaktiviert, wenn der aktuelle Abstand dx außerhalb des Deaktivierungsbereichs zwischen dx_{min, aus, j} und dx_{max, aus, j} liegt. In Abhängigkeit des jeweils ausgewählten Betriebszustands kann zusätzlich von der Steuereinheit 12 ein Abtriebsstrang des Fahrzeugs, welcher einen Antriebsmotor des Fahrzeugs mit beispielsweise Antriebsrädern des Fahrzeugs verbindet, geöffnet oder geschlossen werden. Die mehreren vorgegebenen diskreten Betriebszustände umfassen insbesondere einen konstanten Fahrbetrieb, einen Freilaufbetrieb, einen Schubbetrieb, einen Segelbetrieb, einen Rekuperationsbetrieb und einen Bremsbetrieb. Insbesondere wird ein Betriebszustand, in welchem ein Antriebsstrang des Fahrzeugs geschlossen ist und der Antriebsmotor durch die Bewegung des Fahrzeugs geschleppt wird und der Antriebsmotor Energie zur Verringerung seiner Schleppbremsung aufnimmt, nicht verwendet. Durch die Nutzung diskreter Betriebszustände kann insbesondere dieser aus energetischer Sicht ineffiziente Betriebszustand vermieden werden.

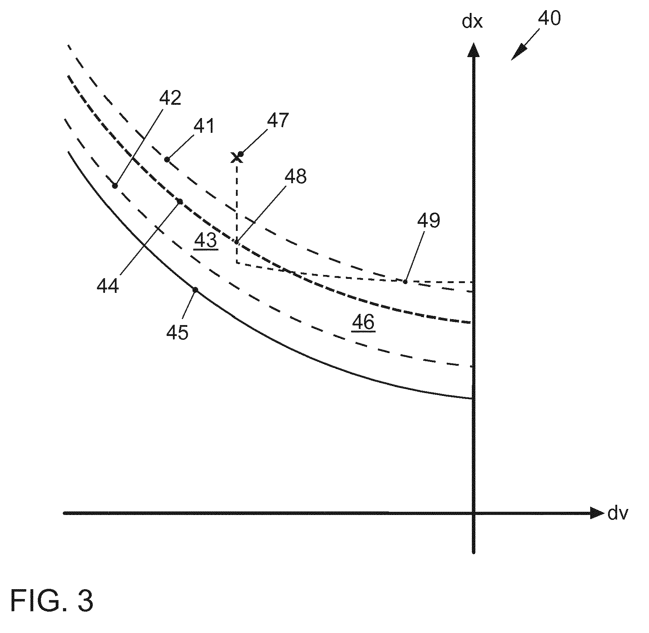

Fig. 3 zeigt ein Diagramm 40, in welchem ein Aktivierungsabstandsbereich 46 und ein Deaktivierungsabstandsbereich 43 eines vorgegebenen Betriebszustands dargestellt sind. Der Aktivierungsabstandsbereich 46 wird durch die Linien 44 und 45 begrenzt. Der Deaktivierungsabstandsbereich 43 wird durch die Linien 41 und 42 begrenzt. Ein Fahrzeug bewegt sich mit konstanter Relativgeschwindigkeit auf ein vorausfahrendes Fahrzeug zu. Das Fahrzeug hat zunächst einen Abstand dx und eine Relativgeschwindigkeit dv wie über das Kreuz 47 in Fig. 3 gezeigt ist. Aufgrund der Relativgeschwindigkeit dv nähert sich das Fahrzeug an das vorausfahrende Fahrzeug an, wodurch sich der Abstand dx verringert. Abstand dx und Relativgeschwindigkeit dv des Fahrzeugs folgen somit der gestrichelten Linie bis zum Punkt 48. Am Punkt 48 wird ein vorgegebener Betriebszustand aktiviert, welcher das Fahrzeug geeignet verzögert, um einen gewünschten Abstand dx zum vorausfahrenden Fahrzeug einzustellen. Am Punkt 49 hat das Fahrzeug eine Relativgeschwindigkeit dv und einen Abstand dx zum vorausfahrenden Fahrzeug erreicht, welche dem Rand des Deaktivierungsabstandsbereich 43 entspricht. Der zuvor eingestellte Betriebszustand wird daher verlassen und ein anderer Betriebszustand eingenommen. Durch die Verwendung des Aktivierungsabstandsbereichs 46 und des Deaktivierungsabstandsbereich 43 kann eine Hysterese realisiert werden, wodurch häufige Betriebszustandswechsel vermieden werden können.

Fig. 2 zeigt ein Diagramm 20, in welchem beispielhaft verschiedenen diskreten Betriebszuständen Abständen dx und Relativgeschwindigkeiten dv zugeordnet sind, welche bei einer Annäherung des Fahrzeugs an ein vorausfahrendes Fahrzeug verwendet werden können. Der Bereich 21 kennzeichnet einen Bereich außerhalb eines Sensorbereichs eines Sensors, welcher zur Erfassung des Abstands zu dem vorausfahrenden Fahrzeug verwendet wird, d. h. im Bereich 21 fährt das Fahrzeug ohne vorausfahrendes Führungsfahrzeug. Im Bereich 22 sind Abstand dx und Relativgeschwindigkeit dv zu einem vorausfahrenden Fahrzeug derart groß, dass eine Beschleunigungsfahrt aufgenommen werden kann, sofern dies nicht durch beispielsweise eine Geschwindigkeitsregelungsanlage begrenzt wird. Im Bereich 23 wird eine Konstantfahrt durchgeführt, d. h. das Fahrzeug bewegt sich mit konstanter Geschwindigkeit. Im Bereich 24 befindet sich das Fahrzeug im Freilaufbetrieb, d. h. das Fahrzeug rollt aus, wobei der Antriebsstrang geöffnet ist und der Motor im Leerlauf läuft. Im Freilaufbetrieb wird nur eine sehr geringe Verzögerung erreicht. Im Bereich 25 wird ein Schubbetrieb verwendet, in welchem das Fahrzeug ausrollt, wobei der Antriebsstrang geschlossen ist und der Motor ohne Aufnahme von zusätzlichem Kraftstoff geschleppt wird. Im Bereich 26 wird das Fahrzeug in einem Rekuperationsbetrieb betrieben, in welchem das Fahrzeug ausrollt und kinetische Energie zurückgewonnen wird. Im Bereich 27 wird ein Bremsbetrieb verwendet, in welchem das Fahrzeug ausrollt und zusätzlich über beispielsweise Reibungsbremsen oder dergleichen verzögert wird.

Der Betrieb eines Fahrzeugs wird nachfolgend beispielhaft beschrieben werden. Das Fahrzeug hat beispielsweise eine Relativgeschwindigkeit dv zum vorausfahrenden Fahrzeug und einen Abstand dx zum vorausfahrenden Fahrzeug, wie es über das Kreuz 28 in der Fig. 2 dargestellt ist. Das Fahrzeug befindet sich in der Konstantfahrtbetriebsart 23. Dadurch nähert sich das Fahrzeug dem vorausfahrenden Fahrzeug an, wodurch der Abstand dx geringer wird. Dies ist durch die Linie 29 gezeigt. Sobald das Fahrzeug einen vorbestimmten Abstand dx unterschreitet, wird das Fahrzeug im Freilaufbetrieb 24 betrieben, wodurch die Geschwindigkeit und somit die Relativgeschwindigkeit dv des Fahrzeugs kleiner wird, sodass sich der Abstand dx nur noch geringfügig verringert. Sobald die Relativgeschwindigkeit dv den Wert Null erreicht hat, nähert sich das Fahrzeug nicht weiter an das vorausfahrende Fahrzeug an.

Wenn sich dann ein weiteres Fahrzeug zwischen das eigene Fahrzeug und das vorausfahrende Fahrzeug schiebt, verändert sich der Abstand zum nunmehr vorausfahrenden Fahrzeug sprunghaft und gegebenenfalls ändert sich auch die entsprechende Relativgeschwindigkeit dv. Ein derartiger Fall ist über das Kreuz 30 in Fig. 2 dargestellt. Aufgrund des geringen Abstands dx und der verhältnismäßig hohen Relativgeschwindigkeit dv zum nunmehr vorausfahrenden Fahrzeug wird das eigene Fahrzeug im Schubbetrieb 25 betrieben, wodurch das Fahrzeug entlang der gestrichelten Linie 31 verzögert wird, wodurch sich die Relativgeschwindigkeit dv verringert, bis eine Relativgeschwindigkeit von Null erreicht wird.

Die Übergänge der einzelnen Betriebszustände 22-27 der Fig. 2 können, wie bereits zuvor im Zusammenhang mit Fig. 3 beschrieben wurde, mit einem Hystereseverhalten versehen werden, um häufige Wechsel zwischen den Betriebszuständen zu vermeiden.

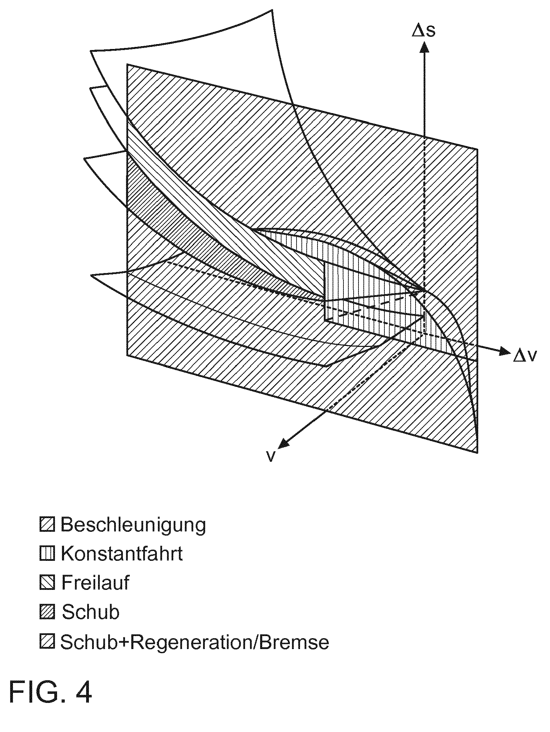

Fig. 4 zeigt ein Diagramm, in welches verschiedene Bereiche für verschiedene diskrete Betriebszustände eines Fahrerassistenzsystems beim Annähern eines Fahrzeugs an ein vorausfahrendes Fahrzeug in Abhängigkeit von der Differenzgeschwindigkeit Δv, dem Abstand Δs und zusätzlich der Eigengeschwindigkeit v des Fahrzeugs dargestellt sind.

In der vorhergehenden Beschreibung wurden Abstände und Abstandsbereiche zu dem vorausfahrenden Fahrzeug zur Auswahl eines von mehreren vorgegebenen Betriebszuständen verwendet. Ein derartiger Abstand oder Abstandsbereich kann jedoch nicht nur über eine Entfernung in beispielsweise Metern zu einem vorausfahrenden Fahrzeug definiert werden, sondern auch über eine sogenannte Zeitlücke oder einen sogenannten Zeitlückenbereich. Eine Zeitlücke gibt dabei die Zeit an, die das eigene Fahrzeug bei der aktuellen Geschwindigkeit voraussichtlich benötigt, um eine aktuelle Position des vorausfahrenden Fahrzeug zu erreichen. Damit ist die Zeitlücke eine Funktion des Abstands des eigenen Fahrzeugs zu dem vorausfahrenden Fahrzeug und der absoluten Geschwindigkeit des eigenen Fahrzeugs.

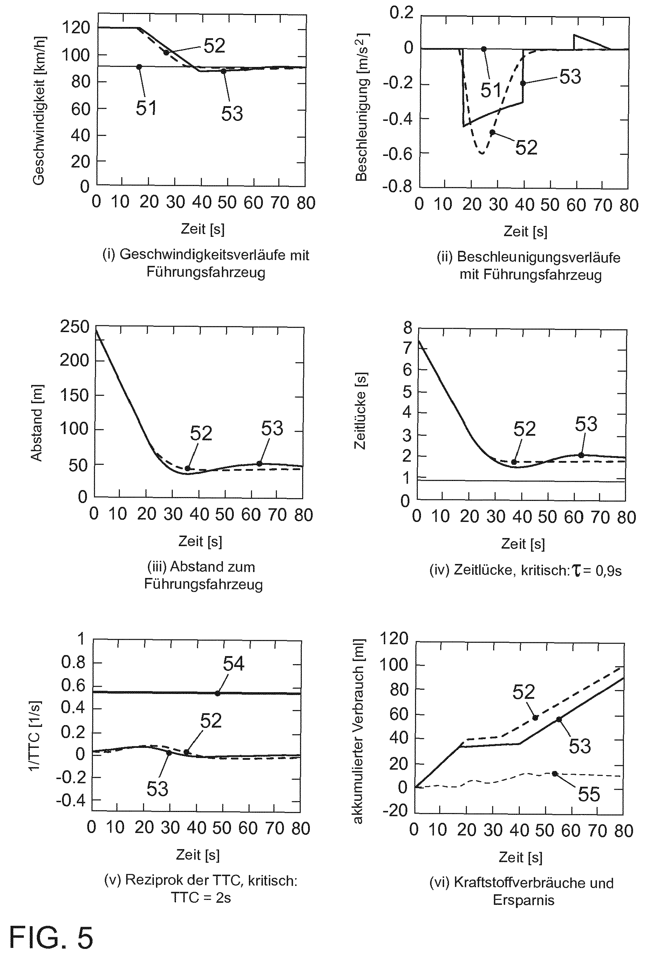

Fig. 5 zeigt einen Vergleich eines Fahrzeugs mit dem zuvor beschriebenen erfindungsgemäßen Fahrerassistenzsystem zur Abstandsregelung im Vergleich zu einem herkömmlichen Abstandsregelungssystem gemäß dem Stand der Technik, welches auch als Adaptive Cruise Control (ACC) bezeichnet wird. Im Diagramm (i) ist ein Geschwindigkeitsverlauf 52 eines Fahrzeugs mit herkömmlicher Abstandsregelung im Vergleich zu einem Geschwindigkeitsverlauf 53 eines erfindungsgemäßen Fahrzeugs bei einem Auffahren auf ein Führungsfahrzeug mit konstanter Geschwindigkeit 51 gezeigt. Das Führungsfahrzeug fährt mit einer näherungsweise konstanten Geschwindigkeit von beispielsweise 90 km/h. Das eigene Fahrzeug nähert sich mit beispielsweise 120 km/h. Diagramm (ii) zeigt die Beschleunigungsverläufe des erfindungsgemäßen Fahrzeugs (Graph 53) und des Fahrzeugs gemäß dem Stand der Technik (Graph 52), welches keine diskreten Betriebszustände verwendet. Bei einer Annäherung des eigenen Fahrzeugs an das Führungsfahrzeug wird bei dem erfindungsgemäßen Fahrzeug ab einer bestimmten Entfernung zu dem Führungsfahrzeug von der Konstantfahrt mit Beschleunigung Null auf beispielsweise einen Freilaufbetrieb umgeschaltet, wodurch die Verzögerung des Fahrzeugs zunächst stark ansteigt und dann aufgrund des geringer werdenden Luftwiderstands etwas absinkt. Bei ca. 40 Sekunden ist der gewünschte Sollabstand zum Führungsfahrzeug erreicht und das Fahrzeug fährt mit Konstantfahrt weiter. Das herkömmliche Fahrzeug, dessen Beschleunigungsverlauf mit dem Graph 52 dargestellt ist, vergrößert bei der Annäherung an das Führungsfahrzeug die Verzögerung kontinuierlich, wodurch der Antriebsmotor beispielsweise in einem ineffizienten Betriebszustand betrieben werden kann, in welchem er von dem Fahrzeug geschleppt wird, aber gleichzeitig eine Leistung von ihm angefordert wird und somit Kraftstoff in dem Antriebsmotor umgesetzt wird. Die Geschwindigkeitsverläufe der beiden Fahrzeuge, wie sie in dem Diagramm (i) gezeigt sind, unterscheiden sich nur unerheblich. Auch der Abstand zum Führungsfahrzeug, welcher in dem Diagramm (iii) dargestellt ist, ist bei dem erfindungsgemäßen Fahrzeug (Graph 53) nur geringfügig unterschiedlich zu dem herkömmlichen Fahrzeug (Graph 52). Ein entsprechender Verlauf der Zeitlücke für das erfindungsgemäße Fahrzeug (Graph 53) und ein Fahrzeug gemäß dem Stand der Technik (Graph 52) sind im Diagramm (iv) gezeigt. Zusätzlich ist eine kritische Zeitlücke von τ = 0,9 Sekunden in dem Diagramm (iv) eingezeichnet. Wie aus dem Diagramm (iv) ersichtlich ist, variiert die Zeitlücke bei dem erfindungsgemäßen Fahrzeug zwar etwas stärker als bei dem Fahrzeug gemäß dem Stand der Technik, aber die kritische Zeitlücke wird niemals unterschritten. Diagramm (v) zeigt den Verlauf des Kehrwerts der Zeit bis zur Kollision (time to collision, TTC), welche vergehen würde, bis das eigene Fahrzeug auf das Führungsfahrzeug auffährt, wenn das eigene Fahrzeug mit konstanter Geschwindigkeit weiterfahren würde. Ein kritischer Wert für den Reziprokwert der TTC ist in Diagramm (v) als Gerade 54 eingezeichnet. Ein Verlauf des Kehrwerts der TTC für das erfindungsgemäße Fahrzeug (Graph 53) und das Fahrzeug gemäß dem Stand der Technik (Graph 52) in Diagramm (v) zeigen, dass sich auch diese Werte nicht wesentlich unterscheiden. Diagramm (vi) zeigt den Kraftstoffverbrauch des erfindungsgemäßen Fahrzeugs (Graph 53) und einen entsprechenden Verbrauch des Fahrzeugs gemäß dem Stand der Technik (Graph 52) sowie eine Differenz der Kraftstoffverbräuche (Graph 55). Wie aus dem Diagramm (vi) ersichtlich ist, kann durch das erfindungsgemäße Verfahren der Kraftstoffverbrauch verringert werden.

Wie aus den Diagrammen (iii) und (iv) ersichtlich ist, wird bei der Einstellung der Betriebsarten bewusst aufgenommen, dass energieoptimal der eingestellte Abstand unterschritten wird, um beispielsweise ein Bremsen zu vermeiden. Das Fahrzeug kann beispielsweise dann im Freilaufbetrieb etwas länger betrieben werden, um zu erlauben, dass das vorausfahrende Fahrzeug wieder wegfährt, um dann auf die gewünschte Zeitlücke bzw. den gewünschten Abstand zu kommen.

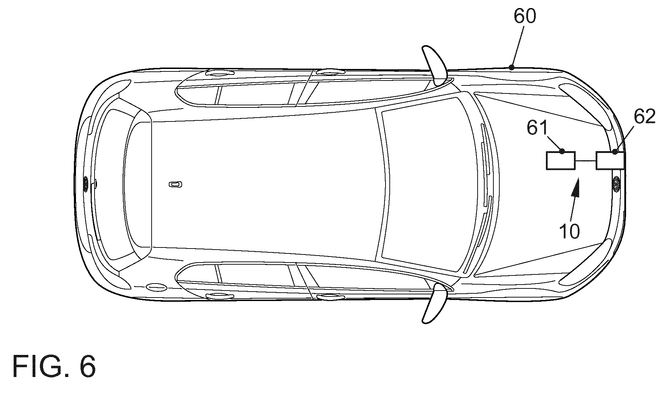

Fig. 6 zeigt ein Fahrzeug 60 gemäß einer Ausführungsform der vorliegenden Erfindung. Das Fahrzeug 60 umfasst ein Fahrerassistenzsystem 10 zur Regelung eines Abstands zu einem vorausfahrenden Fahrzeug, ein sogenanntes Adaptive Cruise Control-System. Das Fahrerassistenzsystem 10 umfasst einen Sensor 62, beispielsweise einen Laser- oder Radarsensor zur Erfassung eines Abstands zu einem vorausfahrenden Fahrzeug. Das Fahrerassistenzsystem 10 umfasst weiterhin eine Steuereinheit 61, welche mit dem Sensor 62 gekoppelt ist und ausgestaltet ist, eine Relativgeschwindigkeit zwischen dem Fahrzeug 60 und einem vorausfahrenden Fahrzeug in Abhängigkeit von einer Änderung des Abstands zwischen dem Fahrzeug 60 und dem vorausfahrenden Fahrzeug zu bestimmen und das Fahrzeug in einen Betriebszustand aus einer Gruppe von mehreren vorgegebenen Betriebszuständen in Abhängigkeit von dem Abstand und der Relativgeschwindigkeit zu betreiben, wenn sich das Fahrzeug 60 an das vorausfahrende Fahrzeug annähert. Bei einer Annäherung an ein langsameres Fahrzeug wird eine entsprechende Betriebsart ausgewählt, um einen voreingestellten oder berechneten Abstand energieeffizient zu erreichen. Wenn beispielsweise ein langsameres Fahrzeug in ca. 250 Metern Entfernung detektiert wird, kann beispielsweise der Segelbetrieb eingestellt werden, um so möglichst viel Energie zu sparen. Wenn sich das eigene Fahrzeug hingegen mit hoher Geschwindigkeit einem langsameren Fahrzeug nähert, kann beispielsweise die Schleppbetriebsart eingestellt werden, um eine ausreichende Verzögerung zu erreichen. Wenn sich in diesem Zustand zwischen das eigene Fahrzeug und das vorausfahrende Fahrzeug ein weiteres Fahrzeug schiebt, kann eine stärkere Verzögerung notwendig sein. Um dies energieoptimal zu ermöglichen, kann beispielsweise Schleppbetrieb und Rekuperationsbetrieb eingestellt werden.

Um einen Abstand zu dem vorausfahrenden Fahrzeug benutzerindividuell verringern oder erhöhen zu können, kann beispielsweise die Zeitlücke, wie sie zuvor definiert wurde, mittels einer Einstellmöglichkeit, beispielsweise einer Walze an einem Lenkrad des Fahrzeugs, einstellbar sein. Ein Zeitbereich für die Zeitlücke kann beispielsweise im Bereich zwischen 2 und 3 Sekunden, vorzugsweise zwischen 2 und 2½ Sekunden, einstellbar sein. In Abhängigkeit der Geschwindigkeit des Fahrzeugs ergibt sich daraus ein Abstandsbereich zum vorausfahrenden Fahrzeug.

Die zuvor beschriebene Bestimmung von Abstandsbereichen, denen dann Betriebszustände zugeordnet werden, unter Berücksichtigung von Geschwindigkeit und Relativgeschwindigkeit, kann auch dahingehend abgeändert werden, dass unter Berücksichtigung von Abstand und Geschwindigkeit ein Relativgeschwindigkeitsintervall bestimmt wird, dem ein Betriebszustand zugeordnet wird. Ebenso kann ein Geschwindigkeitsintervall aus Abstand und Relativgeschwindigkeit bestimmt werden.

## Patentansprüche

1. Verfahren für ein Fahrerassistenzsystem eines Fahrzeugs zur Steuerung eines Abstands des Fahrzeugs zu einem weiteren Fahrzeug, umfassend:
- Bestimmen eines Abstands (dx) zwischen dem Fahrzeug (60) und dem weiteren Fahrzeug,
- Bestimmen einer Relativgeschwindigkeit (dv) zwischen dem Fahrzeug (60) und dem weiteren Fahrzeug, und
- Betreiben des Fahrzeugs (60) in einem Betriebszustand aus einer Gruppe von mehreren vorgegeben Betriebszuständen in Abhängigkeit von dem Abstand (dx) und der Relativgeschwindigkeit (dv), wenn sich das Fahrzeug (60) an das weitere Fahrzeug annähert,
**gekennzeichnet durch**:
- Zuordnen eines jeweiligen Abstandsbereichs zu jedem der Betriebszustände der Gruppe von mehreren vorgegebenen Betriebszuständen, wobei der jeweilige Abstandsbereich in Abhängigkeit von einer Geschwindigkeit (v) des Fahrzeugs (60) und der Relativgeschwindigkeit (dv) bestimmt wird, und
- Betreiben des Fahrzeugs (60) in einem Betriebszustand aus der Gruppe von mehreren vorgegebenen Betriebszuständen, wenn sich das Fahrzeug (60) an das weitere Fahrzeug (60) annähert und der Abstand zwischen dem Fahrzeug (60) und dem weiteren Fahrzeug in dem dem Betriebszustand zugeordneten Abstandsbereich liegt.

2. Verfahren nach Anspruch 1, **dadurch gekennzeichnet, dass** das Verfahren ferner umfasst:
- Bestimmen in Abhängigkeit von der Relativgeschwindigkeit (dv), ob sich das Fahrzeug (60) dem weiteren Fahrzeug nähert.

3. Verfahren nach Anspruch 1 oder 2, **dadurch gekennzeichnet, dass** die Gruppe von mehreren vorgegebenen Betriebszuständen keinen Betriebszustand umfasst, in welchem ein Antriebsstrang des Fahrzeugs zwischen einem Antriebsmotor des Fahrzeugs und Antriebsrädern des Fahrzeugs geschlossen ist und der Antriebsmotor durch die Bewegung des Fahrzeugs geschleppt wird und der Antriebsmotor Energie zur Verringerung seiner Schleppbremsung aufnimmt.

4. Verfahren nach einem der vorhergehenden Ansprüche, **dadurch gekennzeichnet, dass** die Gruppe von mehreren vorgegebenen Betriebszuständen mindestens einen Betriebszustand umfasst, in welchem ein Antriebsstrang des Fahrzeugs (60) geöffnet ist.

5. Verfahren nach einem der vorhergehenden Ansprüche, **dadurch gekennzeichnet, dass** die Gruppe von mehreren vorgegebenen Betriebszuständen besteht aus:
- einem Konstantfahrtbetrieb (23), in welchem ein Antriebsmotor des Fahrzeugs (60) das Fahrzeug (60) mit konstanter Geschwindigkeit antreibt,
- einem Freilaufbetrieb (24), in welchem ein Antriebsstrang des Fahrzeugs (60) geöffnet ist und der Antriebsmotor läuft,
- einem Schubbetrieb (25), in welchem der Antriebsstrang des Fahrzeugs (60) geschlossen ist und der Antriebsmotor durch die Bewegung des Fahrzeugs (60) geschleppt wird ohne zusätzliche Energie aufzunehmen,
- einem Segelbetrieb, in welchem ein Antriebsstrang des Fahrzeugs (60) geöffnet ist und der Antriebsmotor abgeschaltet ist,
- einem Rekuperationsbetrieb (26), in welchem kinetische Energie des Fahrzeugs (60) in eine in einem Energiespeicher des Fahrzeugs (60) speicherbare Energie umgewandelt und gespeichert wird,
- einem Bremsbetrieb (27), in welchem eine Bremsanlage des Fahrzeugs (60) betätigt wird, und
- einer Kombination aus den zuvor beschriebenen Betriebszuständen.

6. Verfahren nach einem der vorhergehenden Ansprüche, **dadurch gekennzeichnet, dass** das Verfahren ferner umfasst:
- Bestimmen eines Sollabstands zwischen dem Fahrzeug (60) und dem weiteren Fahrzeug in Abhängigkeit von einer Geschwindigkeit (v) des Fahrzeugs (60) und der Relativgeschwindigkeit (dv), und
- Betreiben des Fahrzeugs (60) in einem Betriebszustand aus der Gruppe von mehreren vorgegebenen Betriebszuständen in Abhängigkeit von dem Abstand (dx) und dem Sollabstand, wenn sich das Fahrzeug (60) an das weitere Fahrzeug annähert.

7. Verfahren nach einem der vorhergehenden Ansprüche, **dadurch gekennzeichnet, dass** das Verfahren ferner umfasst:
- Zuordnen eines jeweiligen Aktivierungsabstandsbereichs zu jedem der Betriebszustände der Gruppe von mehreren vorgegebenen Betriebszuständen, wobei der jeweilige Aktivierungsabstandsbereich in Abhängigkeit von einer Geschwindigkeit (v) des Fahrzeugs (60) und der Relativgeschwindigkeit (dv) bestimmt wird,
- Zuordnen eines jeweiligen Deaktivierungsabstandsbereichs zu jedem der Betriebszustände der Gruppe von mehreren vorgegebenen Betriebszuständen, wobei der jeweilige Deaktivierungsabstandsbereich in Abhängigkeit von einer Geschwindigkeit (v) des Fahrzeugs (60) und der Relativgeschwindigkeit (dv) bestimmt wird,
- Beginnen eines Betriebs des Fahrzeugs (60) in einem Betriebszustand aus der Gruppe von mehreren vorgegebenen Betriebszuständen, wenn sich das Fahrzeug (60) an das weitere Fahrzeug annähert und der Abstand zwischen dem Fahrzeug (60) und dem weiteren Fahrzeug in dem dem Betriebszustand zugeordneten Aktivierungsabstandsbereich liegt, und
- Beenden des Betriebs des Fahrzeugs (60) in dem zuvor begonnenen Betriebszustand, wenn der Abstand zwischen dem Fahrzeug (60) und dem weiteren Fahrzeug den dem Betriebszustand zugeordneten Deaktivierungsabstandsbereich verlässt.

8. Verfahren nach einem der Ansprüche 6-7, **dadurch gekennzeichnet, dass** das Verfahren ferner umfasst:
- Bestimmen eines Modells einer Fahrzeugdynamik des Fahrzeugs (60), und
- Bestimmen des Sollabstands, des Abstandsbereichs, des Aktivierungsabstandsbereichs und/oder des Deaktivierungsabstandsbereichs zusätzlich in Abhängigkeit von dem Modell der Fahrzeugdynamik.

9. Verfahren nach Anspruch 8, **dadurch gekennzeichnet, dass** das Modell der Fahrzeugdynamik in Abhängigkeit von einem oder mehreren der folgenden Parameter bestimmt wird:
- Fahrzeugmasse,
- Luftwiderstandsbeiwert,
- Querspantfläche,
- Rollwiderstandsbeiwert,
- übersetzungsabhängige Zuschlagsterme,
- Windgeschwindigkeit,
- Windrichtung,
- Niederschlagsintensität,
- Steigung (α) einer Strecke vor dem Fahrzeug,
- Straßenklasse,
- Anzahl der Fahrstreifen,
- Geschwindigkeitsbeschränkung, und
- Überholverbot.

10. Verfahren nach einem der Ansprüche 6-9, **dadurch gekennzeichnet, dass** das Verfahren ferner umfasst:
- Bestimmen des Sollabstands, des Abstandsbereichs, des Aktivierungsabstandsbereichs und/oder des Deaktivierungsabstandsbereichs zusätzlich in Abhängigkeit von einem durch einen Benutzer des Fahrzeugs (60) einstellbaren Fahrmodus, wobei der Fahrmodus einen Sportmodus und einen Energiesparmodus umfasst.

11. Verfahren nach einem der vorhergehenden Ansprüche, **dadurch gekennzeichnet, dass** das Verfahren ferner umfasst:
- Ausgeben einer Information über den Betriebszustand, in welchem das Fahrzeug (60) betrieben wird und/oder in welchem das Fahrzeug (60) voraussichtlich als nächstes betrieben werden wird, an einen Fahrer des Fahrzeugs (60).

12. Fahrerassistenzsystem für ein Fahrzeug zur Steuerung eines Abstands des Fahrzeugs zu einem weiteren Fahrzeug, umfassend:
- einen Sensor (62) zum Bestimmen eines Abstands (dx) zwischen dem Fahrzeug (60) und dem weiteren Fahrzeug, und
- eine Steuereinheit (61), welche ausgestaltet ist, eine Relativgeschwindigkeit (dv) zwischen dem Fahrzeug (60) und dem weiteren Fahrzeug in Abhängigkeit von einer Änderung des Abstands (dx) zwischen dem Fahrzeug (60) und dem weiteren Fahrzeug zu bestimmen und das Fahrzeug (60) in einem Betriebszustand aus einer Gruppe von mehreren vorgegebenen Betriebszuständen in Abhängigkeit von dem Abstand (dx) und der Relativgeschwindigkeit (dv) zu betreiben, wenn sich das Fahrzeug (60) an das weitere Fahrzeug annähert.
**dadurch gekennzeichnet dass** die Steuereinheit (61) ferner ausgestaltet ist,
- jedem der Betriebszustände der Gruppe von mehreren vorgegebenen Betriebszuständen einen jeweiligen Abstandsbereich zuzuordnen, wobei der jeweilige Abstandsbereich in Abhängigkeit von einer Geschwindigkeit (v) des Fahrzeugs (60) und der Relativgeschwindigkeit (dv) bestimmt wird, und
- das Fahrzeugs (60) in einem Betriebszustand aus der Gruppe von mehreren vorgegebenen Betriebszuständen zu betreiben, wenn sich das Fahrzeug (60) an das weitere Fahrzeug (60) annähert und der Abstand zwischen dem Fahrzeug (60) und dem weiteren Fahrzeug in dem dem Betriebszustand zugeordneten Abstandsbereich liegt.

13. Fahrerassistenzsystem nach Anspruch 12, **dadurch gekennzeichnet, dass** das Fahrerassistenzsystem (10) zur Durchführung des Verfahrens nach einem der Ansprüche 1-11 ausgestaltet ist.

14. Fahrzeug, umfassend ein Fahrerassistenzsystem (10) nach Anspruch 12 oder 13.

## Claims

1. Method for a driver assistance system in a vehicle for controlling a distance from the vehicle to a further vehicle, comprising:
- determination of a distance (dx) between the vehicle (60) and the further vehicle,
- determination of a relative speed (dv) between the vehicle (60) and the further vehicle, and
- operation of the vehicle (60) in an operating state from a group of a plurality of prescribed operating states on the basis of the distance (dx) and the relative speed (dv) when the vehicle (60) approaches the further vehicle, **characterized by**:
- association of a respective distance range with each of the operating states of the group of a plurality of prescribed operating states, wherein the respective distance range is determined on the basis of a speed (v) of the vehicle (60) and the relative speed (dv), and
- operation of the vehicle (60) in an operating state from the group of a plurality of prescribed operating states when the vehicle (60) approaches the further vehicle (60) and the distance between the vehicle (60) and the further vehicle is in the distance range associated with the operating state.

2. Method according to Claim 1, **characterized in that** the method also comprises:
- determination, on the basis of the relative speed (dv), of whether the vehicle (60) is approaching the further vehicle.

3. Method according to Claim 1 or 2, **characterized in that** the group of a plurality of prescribed operating states does not comprise an operating state in which a drive train of the vehicle between a drive motor of the vehicle and drive wheels of the vehicle is closed and the drive motor is dragged by the movement of the vehicle and the drive motor draws energy to decrease its drag braking.

4. Method according to one of the preceding claims, **characterized in that** the group of a plurality of prescribed operating states comprises at least one operating state in which a drive train of the vehicle (60) is open.

5. Method according to one of the preceding claims, **characterized in that** the group of a plurality of prescribed operating states consists of:
- a constant speed mode (23), in which a drive motor of the vehicle (60) drives the vehicle (60) at constant speed,
- a freewheeling mode (24), in which a drive train of the vehicle (60) is open and the drive motor is running,
- a coasting mode (25), in which the drive train of the vehicle (60) is closed and the drive motor is dragged by the movement of the vehicle (60) without drawing additional energy,
- a sailing mode, in which a drive train of the vehicle (60) is open and the drive motor is switched off,
- a recuperation mode (26), in which kinetic energy from the vehicle (60) is converted into an energy that can be stored in an energy store of the vehicle (60) and is stored,
- a braking mode (27), in which a braking system of the vehicle (60) is operated, and
- a combination of the operating states described above.

6. Method according to one of the preceding claims, **characterized in that** the method also comprises:
- determination of a target distance between the vehicle (60) and the further vehicle on the basis of a speed (v) of the vehicle (60) and the relative speed (dv), and
- operation of the vehicle (60) in an operating state from the group of a plurality of prescribed operating states on the basis of the distance (dx) and the target distance when the vehicle (60) approaches the further vehicle.

7. Method according to one of the preceding claims, **characterized in that** the method also comprises:
- association of a respective activation distance range with each of the operating states of the group of a plurality of prescribed operating states, wherein the respective activation distance range is determined on the basis of a speed (v) of the vehicle (60) and the relative speed (dv),
- association of a respective deactivation distance range with each of the operating states of the group of a plurality of prescribed operating states, wherein the respective deactivation distance range is determined on the basis of a speed (v) of the vehicle (60) and the relative speed (dv),
- beginning of operation of the vehicle (60) in an operating state from the group of a plurality of prescribed operating states when the vehicle (60) approaches the further vehicle and the distance between the vehicle (60) and the further vehicle is in the activation distance range associated with the operating state, and
- termination of operation of the vehicle (60) in the previously begun operating state when the distance between the vehicle (60) and the further vehicle leaves the deactivation distance range associated with the operating state.

8. Method according to one of Claims 6-7, **characterized in that** the method also comprises:
- determination of a model of vehicle dynamics of the vehicle (60), and
- determination of the target distance, the distance range, the activation distance range and/or the deactivation distance range additionally on the basis of the model of the vehicle dynamics.

9. Method according to Claim 8, **characterized in that** the model of the vehicle dynamics is determined on the basis of one or more of the following parameters:
- vehicle mass,
- drag coefficient,
- reference area,
- rolling resistance coefficient,
- translation-dependent supplementary terms,
- wind speed,
- wind direction,
- precipitation intensity,
- gradient (α) of a section ahead of the vehicle,
- road class,
- number of lanes,
- speed limit, and
- overtaking restriction.

10. Method according to one of Claims 6-9, **characterized in that** the method also comprises:
- determination of the target distance, the distance range, the activation distance range and/or the deactivation distance range additionally on the basis of a driving mode that can be set by a user of the vehicle (60), wherein the driving mode comprises a sports mode and an energy saving mode.

11. Method according to one of the preceding claims, **characterized in that** the method also comprises:
- output of a piece of information about the operating state in which the vehicle (60) is operated and/or in which the vehicle (60) will probably be operated next to a driver of the vehicle (60).

12. Driver assistance system for a vehicle for controlling a distance from the vehicle to a further vehicle, comprising:
- a sensor (62) for determining a distance (dx) between the vehicle (60) and the further vehicle, and
- a control unit (61) that is designed to determine a relative speed (dv) between the vehicle (60) and the further vehicle on the basis of a change in the distance (dx) between the vehicle (60) and the further vehicle and to operate the vehicle (60) in an operating state from a group of a plurality of prescribed operating states on the basis of the distance (dx) and the relative speed (dv) when the vehicle (60) approaches the further vehicle, **characterized in that** the control unit (61) is furthermore designed
- to associate a respective distance range with each of the operating states of the group of a plurality of prescribed operating states, wherein the respective distance range is determined on the basis of a speed (v) of the vehicle (60) and the relative speed (dv), and
- to operate the vehicle (60) in an operating state from the group of a plurality of prescribed operating states when the vehicle (60) approaches the further vehicle (60) and the distance between the vehicle (60) and the further vehicle is in the distance range associated with the operating state.

13. Driver assistance system according to Claim 12, **characterized in that** the driver assistance system (10) is designed to carry out the method according to one of Claims 1-11.

14. Vehicle comprising a driver assistance system (10) according to Claim 12 or 13.

## Revendications

1. Procédé pour un système d'assistance au conducteur d'un véhicule qui contrôle la distance du véhicule par rapport à un autre véhicule, le procédé comportant les étapes qui consistent à :
déterminer la distance (dx) entre le véhicule (60) et l'autre véhicule,
déterminer la vitesse relative (dv) entre le véhicule (60) et l'autre véhicule et
amener le véhicule (60) dans un état de fonctionnement sélectionné dans un groupe formé de plusieurs états prédéterminés de fonctionnement en fonction de la distance (dx) et de la vitesse relative (dv) lorsque le véhicule (60) se rapproche de l'autre véhicule,
**caractérisé par** les étapes qui consistent à :
associer une plage respective de distances à chacun des états de fonctionnement du groupe formé de plusieurs états prédéterminés de fonctionnement, la plage de distances particulière étant déterminée en fonction de la vitesse (v) du véhicule (60) et de la vitesse relative (dv) et
amener le véhicule (60) dans un état de fonctionnement sélectionné dans le groupe formé de plusieurs prédéterminés de fonctionnement lorsque le véhicule (60) se rapproche de l'autre véhicule (60) et que la distance entre le véhicule (60) et l'autre véhicule est située dans la plage de distances associée à l'état de fonctionnement.

2. Procédé selon la revendication 1, **caractérisé en ce que** le procédé comprend en outre l'étape qui consiste à déterminer en fonction de la vitesse relative (dv) si le véhicule (60) s'approche de l'autre véhicule.

3. Procédé selon les revendications 1 ou 2, **caractérisé en ce que** le groupe formé de plusieurs états prédéterminés de fonctionnement ne comporte pas d'états de fonctionnement dans lesquels le train d'entraînement du véhicule entre le train d'entraînement du véhicule et les roues motrices du véhicule est fermé, le moteur d'entraînement est entraîné par le déplacement du véhicule et le moteur d'entraînement consomme de l'énergie pour réduire sa décélération.

4. Procédé selon l'une des revendications précédentes, **caractérisé en ce que** le groupe formé de plusieurs états prédéterminés de fonctionnement comporte au moins un état de fonctionnement dans lequel le train d'entraînement du véhicule (60) est ouvert.

5. Procédé selon l'une des revendications précédentes, **caractérisé en ce que** le groupe formé de plusieurs états prédéterminés de fonctionnement est constitué de :
un fonctionnement (23) de roulage constant dans lequel le moteur d'entraînement du véhicule (60) entraîne le véhicule (60) à vitesse constante,
fonctionnement (24) en roue libre dans lequel le train d'entraînement du véhicule (60) est ouvert et le moteur d'entraînement tourne,
un fonctionnement (25) "en poussée" dans lequel le train d'entraînement du véhicule (60) est fermé et le moteur d'entraînement est entraîné par le déplacement du véhicule (60) sans consommer d'énergie supplémentaire,
un fonctionnement en "planeur" dans lequel le train d'entraînement du véhicule (60) est ouvert et le moteur d'entraînement est débranché,
un fonctionnement (26) en récupération dans lequel l'énergie cinétique du véhicule (60) est convertie en énergie accumulable et accumulée dans une réserve d'énergie du véhicule (60),
un fonctionnement (27) en freinage dans lequel l'installation de freinage du véhicule (60) est actionnée et
une combinaison des états de fonctionnement décrits ci-dessus.

6. Procédé selon l'une des revendications précédentes, **caractérisé en ce que** le procédé comporte en outre les étapes qui consistent à :
déterminer la distance de consigne entre le véhicule (60) et l'autre véhicule en fonction de la vitesse (v) du véhicule (60) et de la vitesse relative (dv) et
amener le véhicule (60) dans un état de fonctionnement sélectionné dans le groupe formé de plusieurs états prédéterminés de fonctionnement en fonction de la distance (dx) et de la distance de consigne lorsque le véhicule (60) se rapproche de l'autre véhicule.

7. Procédé selon l'une des revendications précédentes, **caractérisé en ce que** le procédé comporte en outre les étapes qui consistent à :
associer une plage respective de distances d'activation à chacun des états de fonctionnement du groupe formé de plusieurs états prédéterminés de fonctionnement, la plage particulière de distances d'activation étant déterminée en fonction de la vitesse (v) du véhicule (60) et de la vitesse relative (dv),
associer une plage respective de distances de désactivation à chacun des états de fonctionnement du groupe formé de plusieurs états prédéterminés de fonctionnement, la plage particulière de distances de désactivation étant déterminée en fonction de la vitesse (v) du véhicule (60) et de la vitesse relative (dv),
lancer un fonctionnement du véhicule (60) dans un état de fonctionnement sélectionné dans le groupe formé de plusieurs états déterminés de fonctionnement lorsque le véhicule (60) se rapproche de l'autre véhicule et que la distance entre le véhicule (60) et l'autre véhicule est située dans la plage de distances d'activation associée à l'état de fonctionnement et
cesser le fonctionnement du véhicule (60) dans l'état de fonctionnement lancé précédemment lorsque la distance entre le véhicule (60) et l'autre véhicule quitte la plage de distances de désactivation associée à l'état de fonctionnement.

8. Procédé selon l'une des revendications 6 et 7, **caractérisé en ce que** le procédé comporte en outre les étapes qui consistent à :
déterminer un modèle de la dynamique du véhicule (60) et
déterminer de plus la distance de consigne, la plage de distances, la plage de distances d'activation et/ou la plage de distances de désactivation en fonction du modèle de la dynamique du véhicule.

9. Procédé selon la revendication 8, **caractérisé en ce que** le modèle de la dynamique du véhicule est déterminé en fonction d'un ou plusieurs des paramètres suivants :
masse du véhicule,
valeur de correction de la résistance de l'air,
surface latérale de prise au vent,
valeur de correction de la résistance au roulage,
terme supplémentaire dépendant du rapport de transmission,
vitesse du vent,
direction du vent,
intensité de précipitation,
pente (α) de la chaussée en avant du véhicule,
classe de chaussée,
nombre de bandes de circulation,
limitation de vitesse et
interdiction de dépassement.

10. Procédé selon l'une des revendications 6 à 9, **caractérisé en ce que** le procédé comporte en outre l'étape qui consiste à déterminer de plus la distance de consigne, la plage de distances, la plage de distances d'activation et/ou la plage de distances de désactivation en fonction d'un mode de conduite réglable par l'utilisateur du véhicule (60), le mode de conduite comprenant un mode sportif et un mode en économie d'énergie.

11. Procédé selon l'une des revendications précédentes, **caractérisé en ce que** le procédé comporte en outre les étapes qui consistent à :
produire à l'intention du conducteur du véhicule (60) une information concernant l'état de fonctionnement dans lequel le véhicule (60) est utilisé et/ou dans lequel le véhicule (60) sera de manière prévisible utilisé ensuite.

12. Système d'assistance au conducteur d'un véhicule, en vue du contrôle de la distance du véhicule par rapport à un autre véhicule, le système comprenant :
un capteur (62) qui détermine la distance (dx) entre le véhicule (60) et l'autre véhicule,
une unité de commande (61) configurée pour déterminer la vitesse relative (dv) entre le véhicule (60) et l'autre véhicule en fonction de la modification de la distance (dx) entre le véhicule (60) et l'autre véhicule et pour amener le véhicule (60) dans un état de fonctionnement sélectionné dans un groupe formé de plusieurs états prédéterminés de fonctionnement, en fonction de la distance (dx) et de la vitesse relative (dv) lorsque le véhicule (60) s'approche de l'autre véhicule,
**caractérisé en ce que** l'unité de commande (61) est en outre configurée pour :
associer à chacun des états de fonctionnement du groupe formé de plusieurs états prédéterminés de fonctionnement une plage respective de distances, la plage particulière de distances étant déterminée en fonction de la vitesse (v) du véhicule (60) et de la vitesse relative (dv) et
amener le véhicule (60) dans un état de fonctionnement sélectionné dans le groupe formé de plusieurs états prédéterminés de fonctionnement lorsque le véhicule (60) s'approche de l'autre véhicule (60) et que la distance entre le véhicule (60) et l'autre véhicule est située dans la plage de distances associée à l'état de fonctionnement.

13. Système d'assistance au conducteur selon la revendication 12, **caractérisé en ce que** le système (10) d'assistance au conducteur est configuré en vue de mettre en oeuvre le procédé selon l'une des revendications 1 à 11.

14. Véhicule comprenant un système (10) d'assistance au conducteur selon les revendications 12 ou 13.
